# EUROPÄISCHE PATENTSCHRIFT

(11) **EP 1 131 825 B1**
(45) Veröffentlichungstag und Bekanntmachung des Hinweises auf die Patenterteilung: **19.05.2004**
(21) Anmeldenummer: 99955987.5
(22) Anmeldetag: 12.11.1999
(51) Int. Cl.: G21C 19/317

(54) **KATALYSATORELEMENT FÜR EINEN REKOMBINATOR ZUM EFFEKTIVEN BESEITIGEN VON WASSERSTOFF AUS STÖRFALLATMOSPHÄREN**
CATALYST ELEMENT FOR A RECOMBINER FOR THE EFFICIENT ELIMINATION OF HYDROGEN FROM ATMOSPHERES CREATED AS A RESULT OF MALFUNCTIONING
ELEMENT CATALYSEUR POUR RECOMBINEUR SERVANT A ELIMINER EFFICACEMENT L'HYDROGENE PROVENANT D'ATMOSPHERES POLLUEES SUITE A UN ACCIDENT

(30) Priorität: 17.11.1998 DE 19852953
(43) Veröffentlichungstag der Anmeldung: 12.09.2001
(73) Patentinhaber: Forschungszentrum Jülich GmbH, 52425 Jülich (DE)
(72) Erfinder: BRÖCKERHOFF, Peter, D-52428 Jülich (DE); VON LENSA, Werner, D-52379 Langerwehe (DE); REINECKE, Ernst, Arndt, D-52064 Aachen (DE)
(74) Vertreter: Rox, Thomas Dr.
(86) Internationale Anmeldenummer: PCT/EP1999/008732
(87) Internationale Veröffentlichungsnummer: WO 2000/030121

(56) Entgegenhaltungen:
- EP-A- 0 301 536
- DE-A- 19 636 557
- US-A- 2 847 284
- US-A- 5 130 079
- US-A- 5 301 217
- US-A- 5 495 511
- US-A- 5 592 521

## Beschreibung

Die Erfindung bezieht sich auf Vorrichtungen, mit denen freigesetzter oder störfallbedingt entstandener Wasserstoff aus nichtinertisierten Räumen, z. B. Sicherheitsbehältern von Druck- und nichtinertisierten Siedewasserreaktoren, die neben Wasserstoff auch Wasserdampf, Luft, Aerosole und weitere Gase enthalten, effektiv rückzündungsfrei beseitigt werden kann. Dabei kann der Wasserstoff in Anwesenheit des vorhandenen Luftsauerstoffs, z. B. mittels katalytischer Verfahren, innerhalb der Vorrichtung zu Wasserdampf rekombiniert werden.

Im Verlauf schwerer Störfälle entstehen in wassergekühlten Kernreaktoren (LWR) infolge der Reduktion von Wasserdampf große Mengen Wasserstoff, die in die Sicherheitsbehälter gelangen. Die maximalen wasserstoffmengen können sowohl bei Druck- als auch Siedewasserreaktoren etwa 20.000 mₙ³ betragen. Aufgrund des sich in den Sicherheitsbehältern (Containments) befindenden Luftsauerstoffs besteht die Gefahr der Bildung zündfähiger Gemische, deren unkontrollierte Entzündung mit anschließender Detonation eine schwere dynamische Druckbeanspruchung der Containmentwände bewirkt. Wasserdampf und Wasserstoff führen darüber hinaus stets zu Druck- und Temperaturerhöhungen der Störfallatmosphäre. Dies ist insbesondere in Siedewasserreaktoren bedeutsam, da die Volumina ihrer Behälter nur etwa 20.000 mₙ³ im Vergleich zu 70.000 mₙ³ bei Druckwasserreaktoren betragen. Druck- und Temperaturerhöhungen führen zu einer zusätzlichen statischen Beanspruchung der Containmentwände. Außerdem besteht bei Leckagen infolge des Überdrucks die Gefahr des Austritts radiotoxischer Substanzen.

Vorbeugende Sicherheitsvorkehrungen bestehen in der Inertisierung der Gasvolumina mit Stickstoff, wie sie im Fall der Siedewasserreaktoren bereits vorgenommen worden ist. Diskutierte und zum Teil bereits realisierte Gegenmaßnahmen stellen katalytische Rekombinatoren dar. Mit deren Hilfe wird der entstandene Wasserstoff sowohl innerhalb als auch außerhalb der Zündgrenzen exotherm katalytisch rekombiniert, d. h. unter Entstehung von Wärme in Wasserdampf umgesetzt. Wasserstoffgehalte mit Konzentrationen innerhalb der Zündgrenzen lassen sich darüber hinaus auch konventionell nach Fremdzündung abbrennen. Die dabei auftretenden Vorgänge sind jedoch nicht kontollierbar, so daß es unter Umständen zu den bereits oben genannten anlagengefährdenden Reaktionen kommen kann.

Zur Beseitigung des im Normalbetrieb und störfallbedingt entstehenden Wasserstoffs wurden sowohl thermische als auch katalytische Rekombinatoren entwickelt, die den Wasserstoff mit dem Sauerstoff der Luft in Wasserdampf rekombinieren. Bevorzugt werden katalytische Systeme, die passiv, d. h. selbststartend und ohne externe Energieversorgung, arbeiten, damit die Verfügbarkeit während eines Störfalls gewährleistet ist. Als Substrate werden bei den bekannten Rekombinatoren sowohl metallische Platten oder Folien als auch hochporöses Granulat verwendet werden, auf die Platin bzw. Palladium als Katalysator aufgebracht ist. Mehrere Folien und Granulatpakete - das Granulat wird von Drahtnetzen zu Paketen zusammengehalten - sind vertikal und parallel zueinander in Blechgehäusen angeordnet. Das Wasserstoff/Luftgemisch tritt an der Unterseite in die Gehäuse ein. An den katalytisch beschichteten Oberflächen setzt die Reaktion ein. Das Gemisch bzw. die Reaktionsprodukte überströmen dabei die Oberflächen der Substrate.

Bisher werden in den Rekombinatoren beidseitig beschichtete Platten oder Folien und Granulatpakete verwendet. Ihre Oberflächen sind homogen, d. h. mit konstanten Edelmetallmengen, belegt. Zudem sind alle Katalysatorelemente komplett beschichtet.

Die Abfuhr der Reaktionswärme aus den Systemen ist daher grundsätzlich problematisch. Sie erfolgt fast ausschließlich infolge Konvektion von den festen Oberflächen an die vorbeiströmenden Gase sowie Wärmestrahlung an benachbarte Strukturen. Zu große Wasserstoffmengen können jedoch zu einer Überhitzung der beschichteten Substrate führen, so daß die Zündtemperatur erreicht oder überschritten wird und es infolgedessen zu homogenen Gasphasenreaktionen mit Deflagration bzw. Detonation kommen kann. Als weiterer Nachteil ist die zusätzliche Aufheizung der direkten Umgebung der Substrate anzusehen.

Aus der US 2,847,284 ist eine Vorrichtung zum katalytischen Rekombinieren von Gasen bekannt. Innerhalb eines Kanals ist in Erstreckungsrichtung des Kanals ein flächiges Katalysatorelement angeordnet. Die Belegungsdichte mit Katalysatormaterial ist auf dem dem Eingang des Kanals nahen Teils des Katalysatorelements im vergleich zum übrigen Teil erhöht. Eine derartige Anordnung führt zu hohen Temperaturen im eingangsnahen Teil des Katalysatorelements.

Die US 5,592,521 offenbart ein Verfahren und eine Vorrichtung zur Rekombination von Wasserstoff in Kernreaktoren, wobei die Wandung von mit wasserstoffhaltigem Gas durchströmten Kanälen zumindest teilweise mit Katalysatormaterial wie Platin oder Palladium beschichtet ist.

Aus der DE 196 36 557 A1 ist ein Rekombinator für Wasserstoff bekannt. Dabei sind die Katalysatorelemente gegenüber den restlichen Teilen des Rekombinators isoliert, was zu einem Aufheizen der Elemente führt.

Das technische Problem der vorliegenden Erfindung besteht daher darin, sowohl kleine als auch große Wasserstoffmengen mit dem in den Sicherheitsbehältern vorhandenen Luftsauerstoff in einem weiten Konzentrationsbereich kontrolliert effizient umzusetzen und die dabei entstehende Reaktionswärme soweit abzuführen, daß im vorliegenden Gemisch die jeweilige Zündtemperatur nicht erreicht wird.

Das zuvor aufgezeigte technische Problem wird durch einen Rekombinator zum Beseitigen von Wasserstoff aus Störfallatmosphären gelöst, mit einem einen flächigen Grundkörper aufweisenden Katalysatorelement, wobei der Grundkörper innerhalb des Durchströmbereiches des Rekombinators angeordnet ist, wobei die von der Störfallatmosphäre überströmte Oberfläche des Grundkörpers eine variierende Belegungsdichte mit Katalysatormaterial aufweist und wobei die Belegungsdichte der Oberfläche des Grundkörpers mit Katalysatormaterial in der vorgegebenen Überströmungsrichtung zunimmt.

Dabei ist erfindungsgemäß erkannt worden, daß die Kombination von beschichteten mit unbeschichteten bzw. mit stärker beschichteten und weniger beschichteten Bereichen einen Einfluß sowohl auf die Reaktionsraten des Umsetzens des Wasserstoffes als auch auf die Kühlung des katalytischen Substrates ausübt. Denn die Reaktionswärme wird infolge der Wärmeleitung innerhalb des Grundkörpers in die unbeschichteten Bereiche geleitet und dort durch Konvektion an die noch nicht reagierenden kühleren Gase des überströmenden Gasgemisches gegeben. Somit läßt sich der Grad des Umsetzens des Wasserstoffes in geeigneter Weise einstellen, wobei in vorteilhafter Weise die großen Wärmemengen, die bei der Rekombination entstehen, jeweils auf ein Maß begrenzt werden, so daß eine Zündung des Gasgemisches der Störfallatmosphäre vermieden wird.

Gemäß der vorliegenden Erfindung nimmt die Belegungsdichte der Oberfläche des Grundkörpers mit Katalysatormaterial in der vorgegebenen Überströmungsrichtung zu. Daher wird beim Überströmen der Oberfläche des Grundkörpers zunächst mit einer geringen Belegungsdichte mit Katalysatormaterial begonnen, da der Wasserstoffanteil im Gasgemisch hoch ist und der Grad des Umsetzens des Wasserstoffes gering gehalten werden soll, um eine zu große Wärmeentwicklung zu vermeiden. Im Verlauf der Überströmung steigt der Anteil der Katalysatormenge auf der Oberfläche zwecks erhöhter Aktivität an, da der Wasserstoffanteil im Gasgemisch mit der Lauflänge abnimmt und damit auch die Gefahr der Zündung.

Dabei variiert in bevorzugter Weise die Belegungsdichte der Oberfläche kontinuierlich, während bei einer weiteren bevorzugten Ausgestaltung der vorliegenden Erfindung die Oberfläche des Grundkörpers beschichtete Abschnitte und unbeschichtete Abschnitte aufweist. Diese Abschnitte sind vorzugsweise als Streifen ausgebildet, wobei die Streifen sowohl quer als auch längs zur Oberströmrichtung ausgerichtet sein können. Eine weitere Variation der Belegungsdichte wird dadurch erzielt, daß die Breite der Streifen in Überströmrichtung variieren oder indem die Belegungsdichte mit Katalysatormaterial benachbarter beschichteter Streifen variiert. Ebenso ist es möglich, daß die längs der Überströmrichtung ausgerichteten Streifen in Längsrichtung eine variierende, vorzugsweise ansteigende Belegungsdichte mit Katalysatormaterial aufweisen.

Aus den zuvor aufgezeigten verschiedenen Ausführungsformen der vorliegenden Erfindung ergibt sich, daß das zugrundeliegende Prinzip einer variierenden Belegungsdichte mit Katalysatormaterial in vielfältiger Weise ausgestaltet sein kann.

Grundsätzlich kann der Grundkörper in jeder Form ausgebildet sein. In bevorzugter Weise ist der Grundkörper jedoch als Platte oder Folie ausgebildet, so daß das über die Oberfläche des Grundkörpers strömende Gasgemisch einen längeren in der Beschichtung mit Katalysatormaterial besonders ausgestalteten Bereich überströmt.

Der Grundkörper kann grundsätzlich auf allen Seiten zumindest teilweise mit Katalysatormaterial beschichtet sein, so daß die gesamte Oberfläche des Grundkörpers optimal an die Umsetzung des Wasserstoffes angepaßt ist. Bei einer weiteren Ausgestaltung der vorliegenden Erfindung weist der Grundkörper mindestens eine unbeschichtete und mindestens eine beschichtete Seite auf. Daher kann die unbeschichtete Seite des Grundkörpers vollständig zur Ableitung der durch die Rekombination erzeugten Wärme genutzt werden. Dieses geschieht einerseits durch Wärmestrahlung und andererseits durch Konvektion, also durch Abgabe der Wärme an das vorbeiströmende Gasgemisch.

Darüber hinaus ist es auch möglich, eine Mehrzahl streifenförmiger Grundkörper vorzusehen, die im Durchströmbereich des Rekombinators angeordnet sind. Diese streifenförmigen Grundkörper können dabei längs oder quer zur Durchströmrichtung angeordnet sein, wobei die Höhen und/oder die Belegungsdichte mit Katalysatormaterial bei den streifenförmigen Grundkörpern variieren kann. Dadurch wird zwar eine durchgehende Fläche, an der das Gasgemisch entlangströmen kann, aufgehoben, jedoch ergibt sich der Vorteil, daß in den Zwischenräumen zwischen den streifenförmigen Grundkörpern Bereiche existieren, in denen sich das Gasgemisch vermischt und/oder beruhigt, so daß der Wärmeaustausch und eine Vergleichmäßigung der Wasserstoffkonzentration im Gasgemisch erreicht wird.

Die vorgenannten sowie die beanspruchten und in den Ausführungsbeispielen beschriebenen erfindungsgemäß zu verwendenen Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können. Weitere Einzelheiten, Merkmale und Vorteile des Gegenstandes der Erfindung ergeben sich aus der nachfolgenden Beschreibung der zugehörigen Zeichnung, in der - beispielhaft - bevorzugte Ausführungsformen des erfindungsgemäßen Katalysatorelementes dargestellt sind. In der Zeichnung zeigen:
- Fig. 1: ein erstes Ausführungsbeispiel eines erfindungsgemäßen Katalysatorelementes mit kontinuierlich variierender Belegungsdichte mit Katalysatormaterial, das im Einströmbereich unbeschichtet ist,
- Fig. 2: ein zweites Ausführungsbeispiel eines Katalysatorelementes mit einer quer zur Strömungsrichtung streifenförmig mit Katalysatormaterial beschichteten Oberfläche,
- Fig. 3: ein drittes Ausführungsbeispiel eines erfindungsgemäßen Katalysatorelementes mit einer quer zur Strömungsrichtung streifenförmigen Beschichtung mit Katalysatormaterial, wobei die Belegungsdichte der Streifen in Strömungsrichtung zunimmt,
- Fig. 4: ein viertes Ausführungsbeispiel eines Katalysatorelementes mit beschichteten Streifen, die entlang der Überströmrichtung ausgerichtet sind,
- Fig. 5: ein fünftes Ausführungsbeispiel des vorliegenden Katalysatorelementes mit einer Mehrzahl streifenförmiger Grundkörper, die mit Katalysatormaterial beschichtet sind, und
- Fig. 6: ein sechstes Ausführungsbeispiel eines Katalysatorelementes mit einer Mehrzahl streifenförmiger Grundkörper, deren Oberflächen abschnittweise mit Katalysatormaterial beschichtet sind.

Im folgenden werden Ausführungsbeispiele für Beschichtungen der Oberfläche von flächigen Grundkörpern beschrieben. Die Pfeile weisen auf die Vorzugsrichtungen hin, mit denen die Grundkörper überströmt werden. Doppelpfeile deuten an, daß beide Strömungsrichtungen möglich sind. Bei nichthomogenen Beschichtungen ist allerdings nur eine Überströmrichtung, nämlich in Richtung höherer Belegungsdichte, vorgegeben, da die Wasserstoffkonzentration in dieser Richtung wegen fortschreitender Rekombination abnimmt.

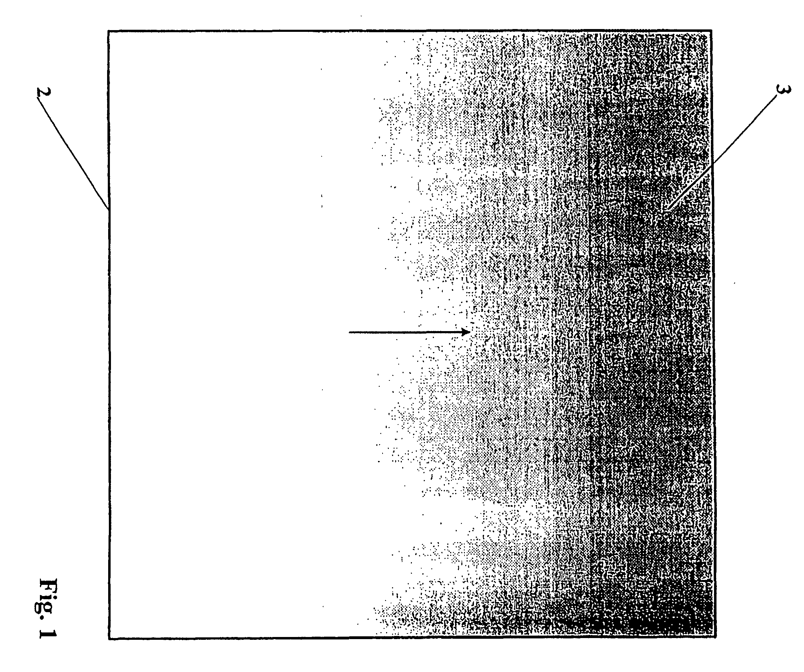

Fig. 1 zeigt die Oberfläche einer Platte oder Folie 2, die im Eintrittsbereich unbeschichtet ist, mit in Strömungsrichtung ansteingender Menge an Katalysatormaterial 3. Dabei wird mit einer geringen Belegungsdichte begonnen, da der Wasserstoffanteil hoch ist und das Prinzip der Nichtzündung durch niedrige Reaktionsraten eingehalten werden soll. Im Verlauf der Überströmung nimmt die Katalysatormenge in Stufen oder kontinuierlich bis auf den Maximalwert am Austritt zu. Dort kann noch ein restlicher Teil des abgereicherten Gemischs trotz höherer Temperaturen explosionsfrei abgebaut werden, da der Anteil der inertisierenden Gasbestandteile Wasserdampf und Stickstoff aufgrund zunehmenden Sauerstoffund Wasserstoffverbrauchs zunimmt.

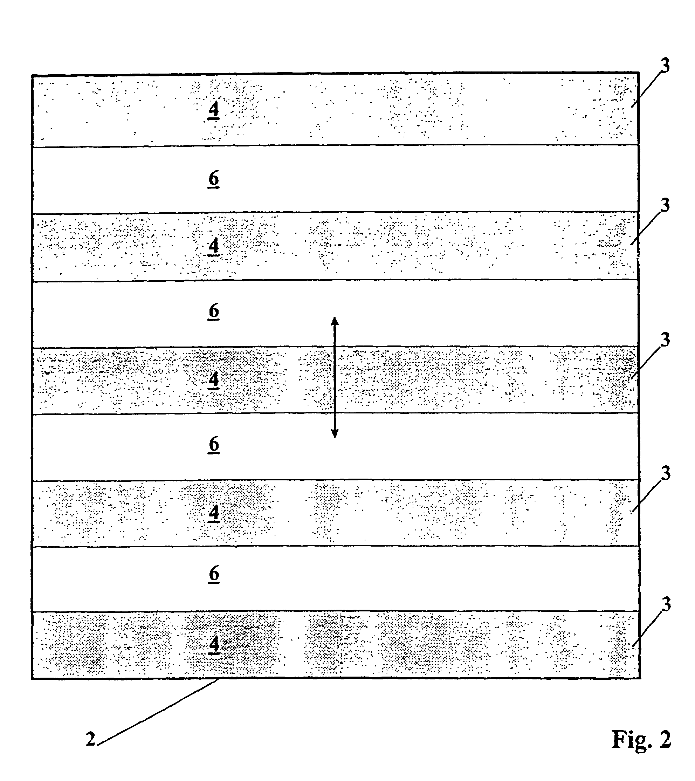

In Fig. 2 ist eine streifenweise beschichtete Platte oder Folie 2 dargestellt. Die Höhe der beschichteten und unbeschichteten Streifen 4 und 6 ist an den gewünschten Reaktionsgrad angepaßt und kann auch über die Lauflänge der Oberfläche variiert werden. An den nichtbeschichteten Streifen 6 kann ein Teil der Reaktionswärme aus den vorangegangenen Streifen 4 in das Substrat und an die Oberfläche abgegeben werden. Außerdem dienen die freien Streifen 6 zur Vermischung der reagierten und nichtreagierten Gemischanteile. Die Rückseite der dargestellten Platte oder Folie 2 kann in gleicher Weise beschichtet oder auch vollständig unbeschichtet sein.

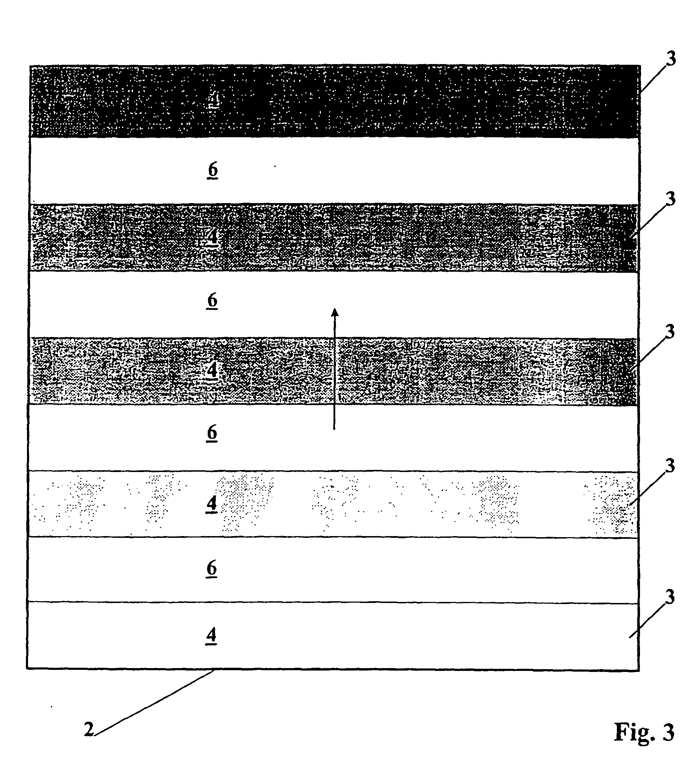

Fig. 3 zeigt ebenfalls eine streifenweise beschichtete Platte oder Folie. Die Beschichtungsmenge der Streifen 4 nimmt mit der Lauflänge in Überströmrichtung zu.

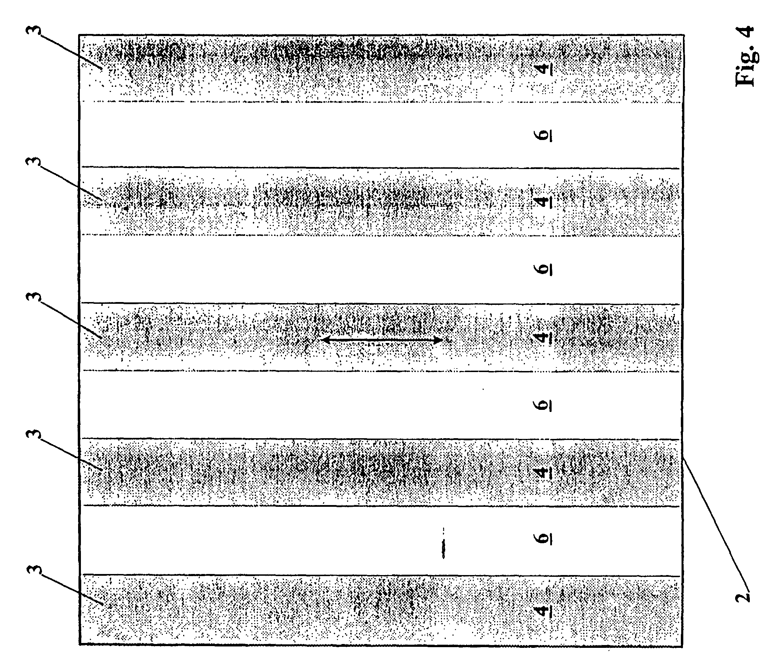

Das Ausführungsbeispiel der Fig. 4 zeigt in Strömungsrichtung ausgerichtete beschichtete Streifen 4, in deren unbeschichtete Zwischenräume, Streifen 6, ein Teil der Reaktionswärme fließen kann. Die Beschichtungsdichte der Streifen 4 kann dabei über die Lauflänge konstant sein oder mit der Lauflänge zunehmen. Auf dem Strömungsweg vermischen sich die schon reagierten Gase, die sowohl Wasserdampf als auch Stickstoff enthalten, zunehmend mit dem über die Kühlflächen der Streifen 6 geführten wasserstoffhaltigen Gas. Infolge der sich ändernden Konzentrationen mit höheren Wasserdampfgehalten und niedrigeren Sauerstoffgehalten wird die Zündfähigkeit des Gemisches über die Lauflänge gezielt herabgesetzt.

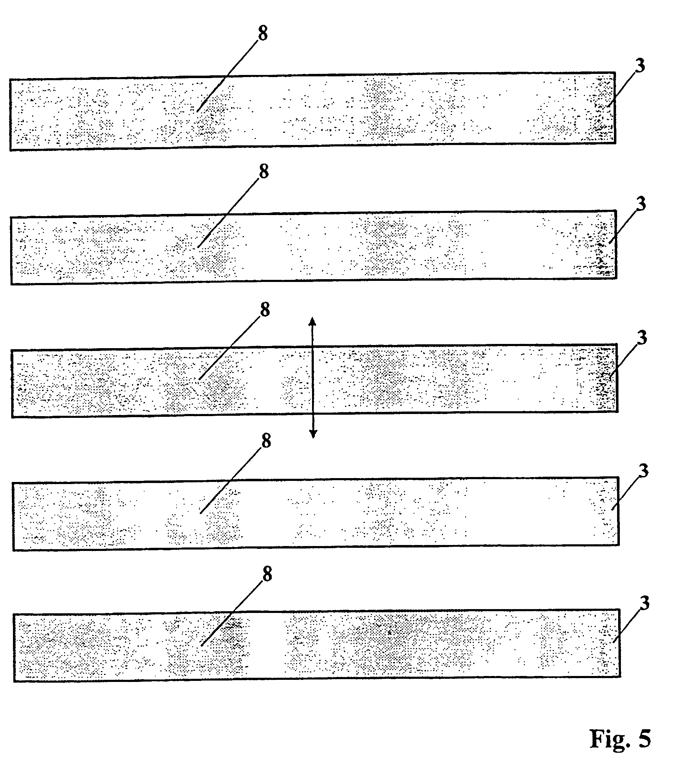

In Fig. 5 sind beid- oder einseitig beschichtete Plattenoder Folienstreifen 8 dargestellt, deren Höhe in Anpassung an den gewünschten Reaktionsgrad pro Platte frei wählbar ist und dementsprechend optimiert werden kann. Werden die Höhen bspw. bis auf Platten- oder Folienstärke reduziert, hat man sich der Stärke eines "eckigen" Drahtes angenähert, d. h. die Katalysatorelemente bestehen dann nur noch aus nebeneinander liegenden parallelen dünnen Strukturen. Würde man senkrecht dazu zusätzlich eine gleiche Anordnung kreisförmigen Querschnitts wählen, läge ein Netz vor. Mit der Höhe der Zwischenräume wird die Größe der Vermischungs- und Kühlzonen festgelegt. In diese Zwischenräume sind auch Kühlvorrichtungen zur Wärmeabfuhr und Vermeidung von Überhitzungen jeweils nachfolgender katalytisch aktiver Streifen einsetzbar. Für jede dieser Strukturen ist sicherzustellen, daß Überhitzungen bei höheren Wasserstoffgehalten ausgeschlossen werden können.

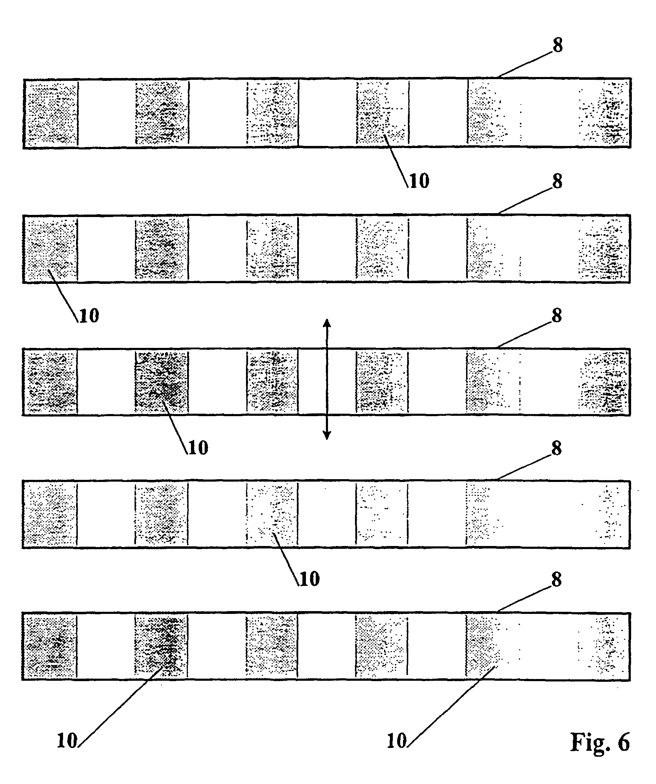

Eine Unterteilung der in Fig. 5 dargestellten beschichteten Platten- oder Folienstreifen 8 zeigt Fig. 6. Über die Breite der Beschichtung läßt sich die Reaktion an den Oberflächen und die Wärmeabgabe durch Wärmeleitung und Konvektion so steuern, daß es nicht zu Überhitzungen und damit zum Erreichen oder Überschreiten der Zündtemperaturen kommen kann. Zusätzlich zu der in Fig. 6 dargestellten Ausführungsform können die beschichteten und unbeschichteten Streifen benachbarter Platten- oder Folienstreifen versetzt zueinander angeordnet sein.

## Patentansprüche

1. Rekombinator zum Beseitigen von Wasserstoff aus Störfallatmosphären
- mit einem einen flächigen Grundkörper (2) aufweisenden Katalysatorelement, wobei der Grundkörper (2) innerhalb des Durchströmbereiches des Rekombinators angeordnet ist,
- wobei die von der Störfallatmosphäre überströmte Oberfläche des Grundkörpers (2) eine variierende Belegungsdichte mit Katalysatormaterial (3) aufweist,
**dadurch gekennzeichnet,**
**daß** die Belegungsdichte der Oberfläche des Grundkörpers (2) mit Katalysatormaterial in der vorgegebenen Überströmungsrichtung zunimmt.

2. Rekombinator nach Anspruch 1, **dadurch gekennzeichnet, daß** die Belegungsdichte der Oberfläche des Grundkörpers (2) mit Katalysatormaterial kontinuierlich variiert und vorzugsweise daß der in Strömungsrichtung vordere Bereich des Grundkörpers (2) unbeschichtet ist.

3. Rekombinator nach Anspruch 1 oder 2, **dadurch gekennzeichnet, daß** die Oberfläche des Grundkörpers (2) beschichtete Abschnitte (4) und unbeschichtete Abschnitte (6) aufweist.

4. Rekombinator nach Anspruch 3, **dadurch gekennzeichnet, daß** die Oberfläche beschichtete Streifen (4) und unbeschichtete Streifen (6) aufweist.

5. Rekombinator nach Anspruch 4, **dadurch gekennzeichnet, daß** die Streifen (4,6) quer zur Überströmrichtung ausgerichtet sind.

6. Rekombinator nach Anspruch 5, **dadurch gekennzeichnet, daß** die Breite der Streifen (4,6) in Überströmrichtung variiert.

7. Rekombinator nach einem der Ansprüche 4 bis 6, **dadurch gekennzeichnet, daß** die Belegungsdichte mit Katalysatormaterial benachbarter beschichteter Streifen (4) variiert.

8. Rekombinator nach Anspruch 4, **dadurch gekennzeichnet, daß** die Streifen (4,6) längs der Überströmrichtung ausgerichtet sind.

9. Rekombinator nach Anspruch 8, **dadurch gekennzeichnet, daß** die Streifen (4) in Längsrichtung eine variierende Belegungsdichte mit Katalysatormaterial aufweisen.

10. Rekombinator nach einem der Ansprüche 1 bis 9, **dadurch gekennzeichnet, daß** eine Mehrzahl von streifenförmigen Grundkörpern (8) vorgesehen ist, die im Durchströmbereich des Rekombinators angeordnet sind.

11. Rekombinator nach Anspruch 10, **dadurch gekennzeichnet, daß** die streifenförmigen Grundkörper (8) längs oder quer zur Durchströmrichtung angeordnet sind.

12. Rekombinator nach Anspruch 10 oder 11, **dadurch gekennzeichnet, daß** die Höhen und/oder die Belegungsdichten mit Katalysatormaterial der streifenförmigen Grundkörper (8) variieren.

## Claims

1. A recombinator for removing the hydrogen from accident-induced atmospheres
- with a catalyst element having a surface-area basic body (2), whereby the basic body (2) is arranged inside the flow-through area of the recombinator,
- whereby the surface of the basic body (2) over which the accident-induced atmosphere flows has a varying coating density with catalyst material (3),
**characterised in that**
the coating density of the surface of the basic body (2) with catalyst material increases in the predetermined flow-over direction.

2. The recombinator according to claim 1, **characterised in that** the coating density of the surface of the basic body (2) with catalyst material varies continuously and preferably that the front area of the basic body (2), as viewed in the flow direction, is uncoated.

3. The recombinator according to claim 1 or 2, **characterised in that** the surface of the basic body (2) has coated sections (4) and uncoated sections (6).

4. The recombinator according to claim 3, **characterised in that** the surface has coated strips (4) and uncoated strips (6).

5. The recombinator according to claim 4, **characterised in that** the strips (4, 6) are orientated at right angles to the flow-over direction.

6. The recombinator according to claim 5, **characterised in that** the width of the strips (4, 6) varies in the flow-over direction.

7. The recombinator according to any one of claims 4 to 6, **characterised in that** the coating density with catalyst material of neighbouring coated strips (4) varies.

8. The recombinator according to claim 4, **characterised in that** the strips (4, 6) are orientated along the flow-over direction.

9. The recombinator according to claim 8, **characterised in that** the strips (4) have in the longitudinal direction a varying coating density with catalyst material.

10. The recombinator according to any one of claims 1 to 9, **characterised in that** a plurality of strip-shaped basic bodies (8) is provided, which are arranged in the flow-through area of the recombinator.

11. The recombinator according to claim 10, **characterised**
**in that** strip-shaped basic bodies (8) are arranged along or at right angles to the flow-through direction.

12. The recombinator according to claim 10 or 11, **characterised in that** the heights and/or the coating densities with catalyst material of the strip-shaped basic bodies (8) vary.

## Revendications

1. Recombinateur pour l'élimination d'hydrogène hors des atmosphères d'incidents
- avec un élément de catalyseur comportant un corps de base plat (2), le corps de base (2) étant placé à l'intérieur de la zone de passage de flux du recombinateur;
- la surface du corps de base (2) submergée par l'atmosphère d'incident présentant une densité variable de chargement en matière de catalyseur,
**caractérisé en ce que**
la densité de chargement en matière de catalyseur de la surface du corps de base (2) augmente dans la direction de débordement prédéterminée.

2. Recombinateur selon la revendication 1, **caractérisé en ce que** la densité de chargement en matière de catalyseur de la surface du corps de base (2) varie en continu et **en ce que**, de préférence, la zone avant dans la direction d'écoulement du corps de base (2) n'est pas enduite.

3. Recombinateur selon la revendication 1 ou 2, **caractérisé en ce que** la surface du corps de base (2) comporte des tronçons enduits (4) et des tronçons non enduits (6).

4. Recombinateur selon la revendication 3, **caractérisé en ce que** la surface du corps de base (2) comporte des bandes enduites (4) et des bandes non enduites (6).

5. Recombinateur selon la revendication 4, **caractérisé en ce que** les bandes (4, 6) sont orientées perpendiculairement à la direction de débordement.

6. Recombinateur selon la revendication 5, **caractérisé en ce que** la largeur des bandes (4, 6) varie dans la direction de débordement.

7. Recombinateur selon l'une quelconque des revendications 4 à 6, **caractérisé en ce que** la densité de chargement en matière de catalyseur de bandes enduites adjacentes (4) varie.

8. Recombinateur selon la revendication 4, **caractérisé en ce que** les bandes (4, 6) sont orientées le long de la direction de débordement.

9. Recombinateur selon la revendication 8, **caractérisé en ce que** les bandes (4) présentent une densité de chargement en matière de catalyseur variable dans la direction longitudinale.

10. Recombinateur selon l'une quelconque des revendications 1 à 9, **caractérisé en ce qu'**il est prévu une pluralité de corps de base en forme de bande (8) qui sont placés dans la zone de passage de flux du recombinateur.

11. Recombinateur selon la revendication 10, **caractérisé en ce que** les corps de base en forme de bande (8) sont placés le long de ou perpendiculairement à la direction de débordement.

12. Recombinateur selon la revendication 10 ou 11, **caractérisé en ce que** les hauteurs et/ou les densités de chargement en matière de catalyseur des corps de base en forme de bande (8) varient.
